# EUROPEAN PATENT SPECIFICATION

(11) **EP 3 529 878 B1**
(45) Date of publication and mention of the grant of the patent: **02.12.2020**
(21) Application number: 18768963.3
(22) Date of filing: 20.07.2018
(51) Int. Cl.: H02K 5/10, E04F 10/10, E06B 7/086, H02K 5/22, H02K 7/00, H02K 7/06, H02K 7/116, H02K 11/33, H02K 7/08, B60K 7/00, H02K 11/21, H02K 9/19, H02K 29/06, H02K 1/18, H02K 7/14

(54) **IN-WHEEL ELECTRIC MOTOR PROVIDED WITH AN INVERTER AND METHOD OF MANUFACTURING SUCH AN IN-WHEEL ELECTRIC MOTOR**
RADINTERNER MOTOR MIT EINEM WECHSELRICHTER UND VERFAHREN ZUR HERSTELLUNG SOLCH EINES RADINTERNEN MOTORS
MOTEUR-ROUE ÉLECTRIQUE ÉQUIPÉ D'UN ONDULEUR ET PROCÉDÉ DE FABRICATION D'UN TEL MOTEUR-ROUE ÉLECTRIQUE

(30) Priority: 20.07.2017 NL 2019300
(43) Date of publication of application: 28.08.2019
(73) Proprietor: E-traction Europe B.V., 7324 AH Apeldoorn (NL)
(72) Inventor: VAN DER WAL, Reinhard Peter, 7324 AH Apeldoorn (NL); VAN SEVENTER, Timothy, 7324 AH Apeldoorn (NE)
(74) Representative: Nederlandsch Octrooibureau
(86) International application number: PCT/NL2018/050504
(87) International publication number: WO 2019/017788

(56) References cited:
- EP-A1- 1 252 034
- EP-A1- 1 271 748
- US-A1- 2007 063 595

## Description

### Field of the invention

The present invention relates to a method of assembling an in-wheel electric motor. Also, the invention relates to an in-wheel electric motor. Furthermore, the invention relates to a drive assembly for a wheel of a vehicle comprising such an electric motor.

### Background

Such an in-wheel electric motor is known from WO 2013/025096 that describes an electric vehicle with an in-wheel electric motor in which the rotor is coupled to a rim of the wheel carrying one or more tyres. The stator is mounted on the frame of the vehicle via a wheel suspension system. The known in-wheel motor is part of a direct drive wheel in which the electromagnets of the motor directly drive the rim and the tyre without any intermediate gears. In this manner, weight and space are saved and the number of components in the drive assembly is minimized.

The torque that is generated by the in-wheel motor depends on the flux-carrying surface between the rotor and the stator and is a quadratic function of the rotor radius. The rotor magnets are placed as far outwardly as possible around the stator, to obtain a largest possible rotor radius and the motor design is optimised to minimize the gap between the rotor and the stator for delivering a maximum power and torque to the tyre. The gap width between rotor and stator is on the other hand designed to be large enough to absorb mechanical impacts on the wheel during driving conditions.

The windings of the stator are powered by power electronics that are situated within the stator, which power electronics convert electrical energy from a power supply system of the vehicle, e.g. a battery pack and/or an electric generator, to an AC current that is suitable for use by the electric motor. Such power electronics typically comprise power electronics, e.g. IGBT current modules and a current regulator, such as described in EP 1 252 034. By using the power electronics to control the current and/or voltage supplied to the windings of the stator, the magnetic field vector of the flux generated by the stator is controlled and the electric motor is operated at the desired torque and/or speed of rotation. By integrating the power electronics within the stator, the length of bus bars which run from the power electronics to the electromagnets can remain short, which is highly desirable in view of minimizing losses of the high electrical currents and voltages generally required for operating such an electric motor, which may for instance amount to 300A at 700V or more.

In order to cool the electrical motor and/or the power electronics, the known drive assembly is provided with a cooling system having one or more cooling channels that are situated close to an outer surface of the stator and/or the power electronics, through which liquid coolant can flow into and out of the drive assembly.

The in-wheel drive assembly can be embodied as a substantially self-contained module, without any moving parts of the vehicle attached to and/or extending into the rotor. The interior space defined by the rotor is preferably substantially closed off to prevent ingress of foreign particles, such as dust and/or wear particles released by a brake system of the vehicle and/or by the road, into said interior.

The in-wheel drive assembly may be mounted on the vehicle in a variety of positions by connecting the vehicle side of the drive assembly to the vehicle frame. A rim for mounting a tire may be attached to the rotor, preferably to a substantially cylindrical outer surface of the rotor.

A disadvantage of the prior art in-wheel electric motor is that repair or replacement of the power electronics requires that the housing is opened and largely removed. Since the electric motor is situated within the wheel, the opening of the housing also requires that the wheel in which the electric motor is accommodated must be removed from the vehicle.

It is an object of the present invention to overcome or mitigate one or more of the disadvantages from the prior art.

### Summary of the invention

The object is achieved by an in-wheel electric motor comprising a stator with at a vehicle side an connector member, a cylindrical hollow stator body connected to the connector member; an outer surface of the stator body being equipped with stator windings, and further comprising a cylindrical rotor body coaxially enclosing the stator; the electric motor further comprising a power electronics device for powering the stator windings, wherein the hollow stator body is provided with a stator body opening at a road side of the electric motor for receiving the power electronics device, and the enclosing rotor body is provided with a removable cover plate covering a rotor body opening of the rotor body at the road side and covering the stator body opening.

By providing a rotor body with a removable cover plate at the road side and a hollow stator body that is open at the road side, the power electronics device can be inserted in or removed from the electric motor in an easily accessible manner without the need for disassembly of the drive wheel from the vehicle. This saves on time for installation and de-installation during maintenance.

According to an embodiment, the in-wheel electric motor is arranged in a manner that the head of the connector member and a casing of the power electronics device are connected by a plugs and sockets arrangement. This arrangement allows that the placement of the power electronics device within the drive wheel assembly is simplified. Preferably, the connector member has an end face facing the road side, wherein the power electronics device is connected to the end face via said plugs and sockets arrangement. According to an embodiment, the connector member is provided with a number of protruding elements or recesses extending from the end face and parallel to an axial direction, and the power electronics device is positioned on the connector member within the hollow stator body with the protruding elements being received in corresponding counter recesses or the recesses on the connector member receiving corresponding protruding elements in a facing surface of the casing of the power electronics device. This significantly facilitates mounting of the power electronics device within the hollow stator body.

According to an embodiment, the in-wheel electric motor is arranged in a manner that the connector member is provided with a first opening of a feed channel for liquid coolant and a second opening of a return channel opening for liquid coolant, each of the feed and return channels being substantially parallel to the axial direction of the connector member, and the power electronics device is provided with a cooling circuitry, the cooling circuitry comprising a feed connector and a return connector for liquid coolant on the facing surface, with the feed connector arranged for liquid tight coupling to the feed channel and the return connector arranged for liquid tight coupling to the return channel, when positioned on the connector member.

By providing the connector member with internal channels for liquid coolant and by providing corresponding connectors on the casing of the power electronics device, connections and disconnections between the cooling circuitry within the rotating parts and the fixed parts of the vehicle are made during the installation and de-installation respectively without further interactions by maintenance personnel.

According to an embodiment, the connector member is provided with a first opening of a feed channel for liquid coolant and a second opening of a return channel opening for liquid coolant, each of the feed and return channels being substantially parallel to the axial direction of the connector member, wherein the power electronics device is provided with a cooling circuitry, the cooling circuitry comprising a feed connector and a return connector for liquid coolant on the facing surface, with the feed connector arranged for liquid tight coupling to the feed channel and the return connector arranged for liquid tight coupling to the return channel, when positioned on the connector member. Thus, coupling of the feed channel to the facing surface can be achieved by simply sliding the power electronics device towards the facing surface of the flange.

According to an embodiment, the hollow stator body is provided with an inner mounting ridge parallel to the circular opening of the hollow stator body, and the casing of the power electronics device is provided at the road side with a bracket that abuts the inner mounting ridge when the power electronics device is positioned on the connector member.

According to an embodiment, the hollow stator body is provided on its inner circumferential surface with at least two inner mounting ridges which extend parallel to the axis of rotation, and the casing of the power electronics device is provided at the road side with a bracket that abuts the inner mounting ridges when the power electronics device is positioned on the connector member.

According to an embodiment, the rotor cover plate is provided with a circular cover plate opening centred with the electric motor rotation axis, and the power electronics device comprises at the road side a resolver for sensing a relative angular position of the rotor with respect to the stator windings, which resolver has a rotation axis coinciding with the electric motor rotation axis and is arranged within the circular cover plate opening and attached to the cover plate. The resolver can thus easily be reached, even when the in-wheel motor is mounted on a vehicle, from the road side. The relative angular position of the rotor with respect to the stator windings as sensed by the rotor may be used for controlling a current and/or voltage that is to be applied on individual stator windings, as known in the art.

According to an aspect, the invention provides a method for assembling an in-wheel electric motor; the electric motor comprising a stator with at a vehicle side an connector member, a cylindrical hollow stator body with a central axis R, connected to the connector member and on an outer surface of the stator body equipped with stator windings, the electric motor further comprising a power electronics device for powering the stator windings the connector member having a number of protruding or recessed elements parallel to the axial direction and extending towards an opening of the hollow stator body at a road side; a surface of the casing of the power electronics device being provided with complementary protruding or receiving elements for engaging the protruding or recessed elements of the connector member; wherein the casing of the power electronics device is positioned via the road side opening inside the hollow stator body with the surface of the casing facing the connector member, and subsequently moving the power electronics device along the direction of the central axis to the connector member; and engaging the protruding or recessed elements of the connector member each in a corresponding one of the protruding or receiving elements on the surface of the casing of the power electronics device.

Additionally, the invention relates to a drive assembly for a wheel of a vehicle either comprising an in-wheel electric motor as described above, or an in-wheel electric motor manufactured by a method as described above wherein the rotor part and the stator part are both adapted to be arranged at least partially within the wheel.

Advantageous embodiments are further defined by the dependent claims.

### Brief description of drawings

The invention will be explained in more detail below with reference to drawings in which illustrative embodiments thereof are shown. The drawings are intended exclusively for illustrative purposes and not as a restriction of the inventive concept.

In the drawings,
Figures 1A, 1B, 1C respectively show a cross-sectional view, a cut-away isometric view of a drive assembly and a cross-section of drive assembly for use with the present invention;
Figure 2 shows a detailed view of an connector member in accordance with an embodiment of the invention,
Figure 3 shows an isometric view of the casing of the power electronics device in accordance with an embodiment of the invention,
   and
Figure 4 shows a detailed cross-sectional view of a coupling of the power electronics device with the connector member of the vehicle according to an embodiment of the invention.

### Detailed description of embodiments

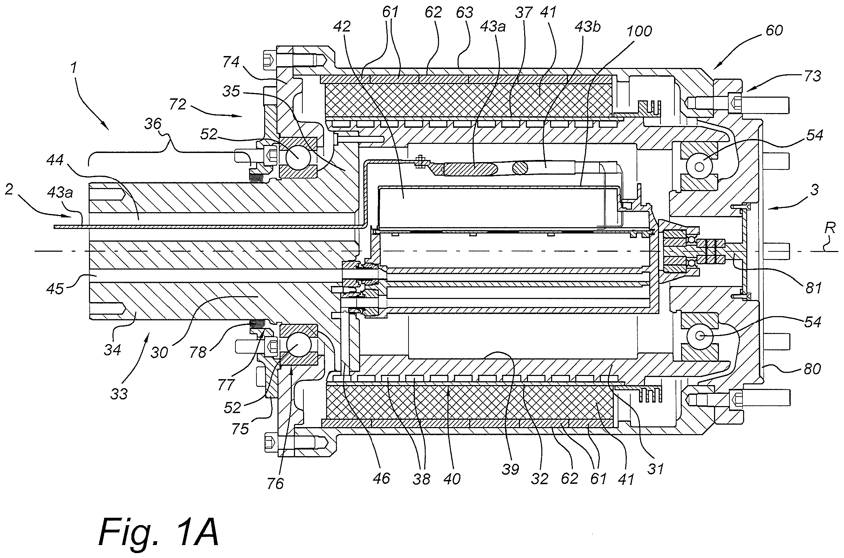

Figure 1A shows a cross-sectional view of a drive assembly 1 for use with the present invention. The drive assembly comprises a stator 30 with a hollow stator body 31 which has an outer surface 32 around which a rotor 60 is arranged. The drive assembly further comprises an axle stub or connector stub 33, arranged at a vehicle side 2 of the assembly 1 for attaching the drive assembly to the vehicle. The connector member 33 is fixedly connected to the stator body 34 via a flange 35 which lies within the rotor 60 and has a larger diameter than a portion 36 of the axle stub 33 which lies outside the peripheral outer surface 63 of the rotor 60. For supporting rotational movement of the rotor 60 around the axis of rotation R, vehicle side bearings 52 are provided via which the rotor supported on the stub 33 on the vehicle side. On the road side 3, the rotor is rotatingly supported on the stator body 31 via road side bearings 54.

A plurality of permanent magnets 61 is attached on an inner circumferential surface 62 of the rotor 60 and can rotate around electromagnets 41 of the stator 30. The electromagnets 41 are fixed on the stator body 31 and drive rotation of the rotor by interaction between the permanent magnets 61 and the magnetic flux generated by the electromagnets 41. The stator 30 and rotor 60 form an electric motor adapted for directly driving rotation of a wheel around axis of rotation R.

The rotor 60 comprises a substantially cylindrical rotor body 71 which has transverse ends 72,73 respectively at its vehicle side 2 and at its road side 3. Both transverse ends 72,73 are substantially closed off in order to prevent foreign particles, such as dust and wear particles from the road or released by a braking system of the vehicle, from entering the interior of the hollow rotor 60. The vehicle side of the rotor is substantially closed off by a side plate 74 which extends transversely to the axis of rotation R and by a cover plate 75. The side plate 74 and cover plate 75 are each provided with an opening through which the portion 34 of the connector member 33 extends. The side plate 74 supports the vehicle side bearings 52 while the cover plate 75 is attached to the side plate 74 to cover the bearings 51 at their transverse vehicle side 2 and comprises an opening 77 through which portion 34 extends. The cover plate 75, together with a shaft seal 78 which is arranged between the inner circumferential edge 79 of the opening 77 and the outer circumference of the shaft 34, prevents foreign particles from damaging the vehicle side bearings 52. Additionally, the cover plate 75 and shaft seal 78 substantially prevent such particles from entering the interior 5 of the rotor from the vehicle side 2, where the particles could interfere with the electromagnets 41.

The road side bearings 54, which are arranged at an inner side of the stator body 31, are covered on the road side 3 by a detachable second cover plate 80. A resolver 81 rotationally connects the stator 30 to the second side plate 80 and is adapted for detecting an angular position of the rotor 60 relative to the stator 30. A circular opening is provided in the second cover plate 80, in which the resolver 81 is attached to the second cover plate 80 for the rotational connection to the rotor part.

For controlling and powering the electromagnets 41, a casing 100 holding circuitry of power electronics 42 is arranged within the hollow stator body 31. The power electronics 42 comprise components, such as IGBT's, for converting electrical energy from a power supply system of the vehicle, e.g. a battery pack and/or an electric generator, to an AC form suitable for use by the electric motor. A resolver 81 provides an angular position signal indicative of an angular position of the rotor to the power electronics so that the alternating current is supplied in phase with the magnetic field of the rotor.

To prevent overheating of the power electronics when the electric motor is in operation, a cooling circuitry is provided comprising cooling ducts (not shown) close to the power electronics 42 within the interior of the stator body 32 and spaced apart from the stator body 32. Coolant is supplied to the cooling ducts via a coolant supply channel 45 which runs through the connector member 33 from the exterior of the rotor to its interior. After having cooled the power electronics 42, the coolant flows via passage 46 in the connector member 33, to a cooling jacket 37 which is provided on the outer surface 32 of the stator body 30. The cooling jacket 37 is provided with channels 38 which form a circuit that runs along the hollow cylindrical body 31 and provides a passage through which liquid coolant flows to cool the electromagnets 41 which are arranged at an outer side 40 of the cooling jacket 37. Relatively cold coolant can thus be supplied through the coolant supply channel 45 with the coolant warming up during its passage through the cooling ducts and absorbing heat energy from the power electronics 42, and subsequently passing through channels 38 to absorb heat-energy from the electromagnets 41 before being removed from the drive assembly 1 and led back to the vehicle through a coolant discharge channel (not shown) which extends through the connector member 33. The warmed-up coolant is preferably cooled in a heat exchanger on the vehicle, after which it is recirculated through the coolant supply channel 45.

Power supply lines 43a, 43b for supplying power to the power electronics 42 run from the exterior of the rotor 60, through passage 44, comprising a through hole, in the connector member 33, to the power electronics.

According to the invention, the casing of the power electronics 42 is mounted on the head i.e., the flange 35 of the connector member 33. The diameter of the opening 90 in the cylindrical rotor body 71 at the road side is larger than the cross-section of the casing of the power electronics 42. The detachable second cover plate 80 that closes off the opening in the cylindrical rotor body 71 at the road side allows that the power electronics 42 can be mounted by inserting the casing through the opening in the cylindrical rotor body 71 at the road side 3. Also, the detachable second cover plate 80 allows to lock the casing of the power electronics device in place and also to relatively easy access the power electronics 42, when needed.

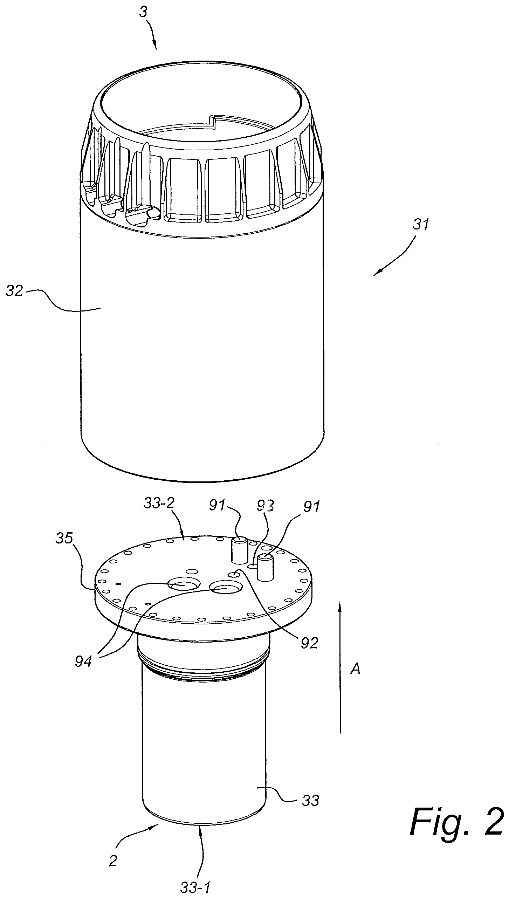

As will be described in more detail with reference to Figure 2, the casing of the power electronics and the connector member 33 are arranged with a plugs and sockets arrangement for connecting the power electronics mechanically, electrically and thermally for mounting, power supply and cooling, respectively.

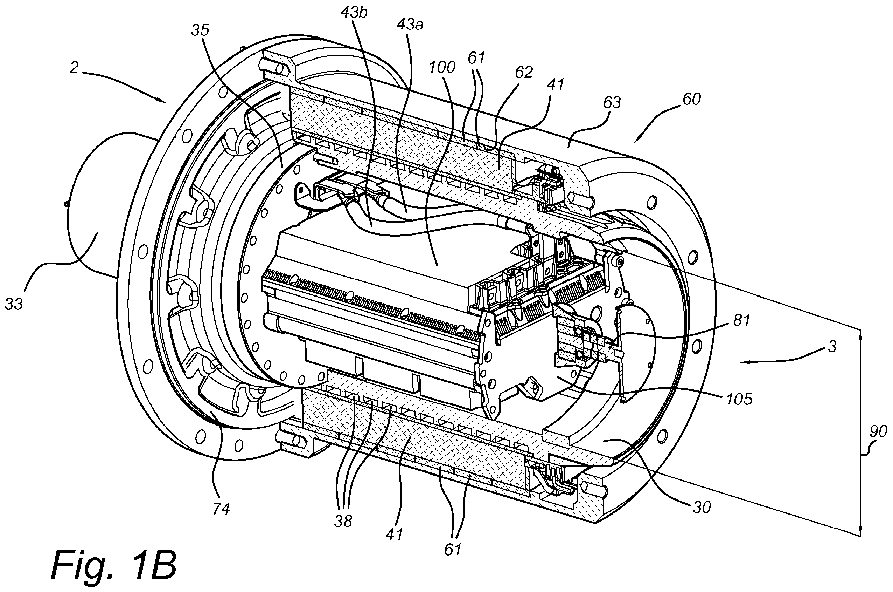

Figure 1B shows a partially cut-away isometric view of the drive assembly of Fig. 1A, in which the second cover plate 80 and the road side bearings 54 however are not shown to allow a better view of the hollow stator body 31 and the resolver 81.

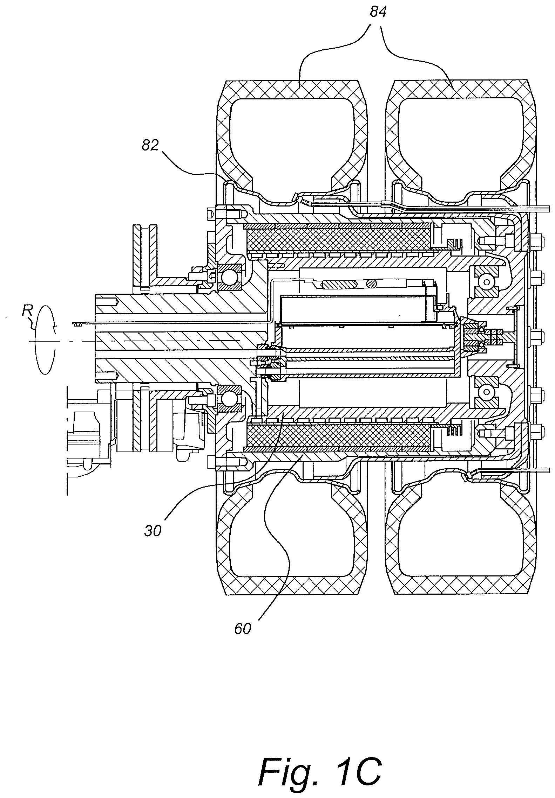

Figure 1C shows a cross-section of a wheel drive assembly for use with the present invention. The wheel drive assembly comprises an in-wheel electric motor 4, a rim 82, and one or more tyres 84.

The in-wheel electric motor 4 comprises the stator part 60 and the rotor part 30. The stator part 60 is coupled to the connector member 33 which is part of the chassis of a vehicle.

The rim 82 is arranged at the outer circumference of the rotor part 60. The rim 82 can be attached to the rotor part by a bolted connection as known in the prior art.

On the rim 82, one or more tyres 84 are mounted. The rotor part 60 and the stator part 30 are both arranged at least partially within the wheel.

Figure 2 shows an isometric view of the connector member 33 and the hollow stator body in accordance with an embodiment of the invention.

The connector member 33 comprises a first end 33-1 at the vehicle side 2 that is to be connected to the chassis of the vehicle (not shown). At a second end 33-2 axially opposite the first end 33-1, the connector member 33 comprises the flange 35 that forms the head of the connector member 33 for connecting to the hollow stator body 31. Within the surface of the flange 35 facing towards the road side 3, the connector member 33 is provided with a number of protruding elements 91 extending along the axial direction A.

At predetermined positions, relative to the positions of the protruding elements 91, the surface of the flange 35 is provided with openings for a feed channel 92 for liquid coolant, a return channel 93 for liquid coolant and through holes 94 for electrical conductors, respectively.

Within the body of the connector member 33, through holes are provided along the axial direction A for the feed channel 92, the return channel 93, and the electrical conductors 94.

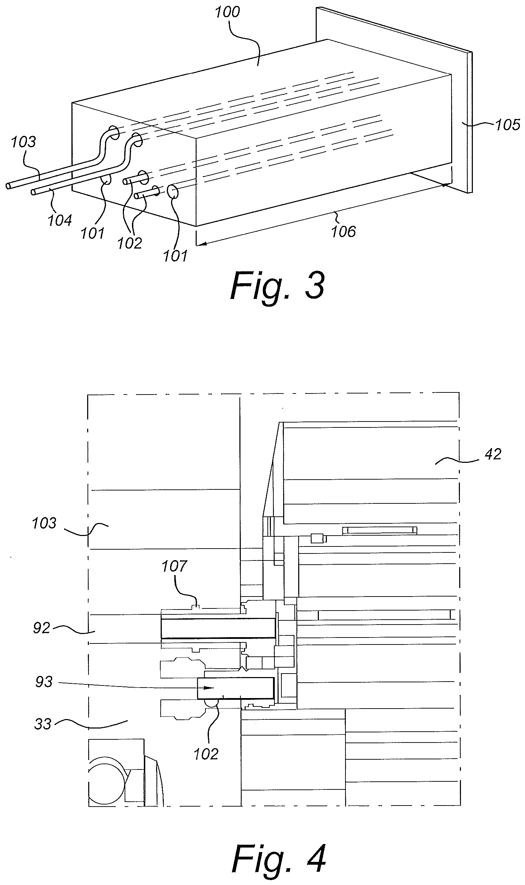

Figure 3 shows an isometric view of the casing 100 of the power electronics device 42 in accordance with an embodiment of the invention.

On the surface of the casing 100 of the power electronics device 42 that faces the flange 35 of the connector member 33 in mounted position, at corresponding positions, counter elements 101 for receiving the protruding elements 91, fluid connectors 102 for liquid tight coupling to the feed and return channels 92, 93, and terminals 103, 104 for the electrical conductors are respectively provided. It will be appreciated that as alternative in the surface of the flange 35 instead of protruding elements 91 recesses are provided and in the surface of the casing that faces the flange 35, protruding counter elements at corresponding positions are provided.

When the casing 100 of the power electronics device 42 is mounted on the flange 35, the protruding elements 91 will be received into the receiving counter elements 101 (or the protruding counter elements will be received in the recesses) and will provide mechanical support for the power electronics device 42 casing 100.

Some play may be allowed between the protruding elements 91 and the counter elements 101 (or the recesses and the protruding counter elements) to provide for some flexibility in the connection when the drive assembly (wheel and in-wheel electric motor) is under dynamic load during operation.

Additionally, the hollow stator body 31 can be provided with an inner mounting flange on the inner circumference of the hollow stator body 31 as a secondary support for the power electronics device 42. The inner mounting flange is positioned at a distance from the flange 35 of the connector member 33 that corresponds substantially with a length 106 of the casing from the flange 35. The casing 100 of the power electronics device 42 comprises at the surface facing the road side a bracket 105 which is in connection with the inner mounting flange of the hollow stator body 31. The bracket 105 and inner mounting flange are best seen in Figure 1B.

In the mounted position, each of the fluid connectors 102 will couple with one of the respective openings of the feed and return channels 92, 93, and the terminals 103, 104 of the electrical conductors will extend through the connector member's through holes for the electrical conductors to the vehicle side 2.

The electrical conductors are connected to an electrical power source (not shown) inside the vehicle (not shown). The electrical power source is for example a battery or an electrical generator.

In an embodiment, the terminals 103, 104 are elongated strips that are perpendicular to the facing surface of the casing 100 and to the surface of the flange 35. At the side of the power electronics device 42 the terminals are connected to power electronics that feed the stator windings to generate an electromagnetic field for interaction with the magnets 61 arranged in the rotor part 60.

Figure 4 shows a detailed cross-sectional view of the casing of the power electronics device 42 mounted on the flange 35 of the connector member 33.

In this cross-section, the respective connections between the feed channel and the feed fluid connector and between the return channel and the return fluid connectors are shown. Also, one of the terminals is shown within the corresponding through hole in the connector member 33.

The connection between the feed channel and the feed fluid connector, and between the return channel and the return fluid connectors are each provided with a seal 107, 108 to be leak-proof.

In an embodiment, the openings of the feed channel 92 and the return channel 93 are provided with seals 107, 108 and check valves (not shown). Advantageously, a check valve will close the coolant circuitry at the vehicle side 2 in case of an open connection at the flange 35 of the connector member 33 when the power electronics device 42 is removed from the flange of the connector member 33.

The invention has been described with reference to the preferred embodiment. Obvious modifications and alterations will occur to others upon reading and understanding the preceding detailed description. It is intended that the invention be construed as including all such modifications and alterations insofar as they come within the scope of the appended claims.

## Claims

1. An in-wheel electric motor (4) comprising a stator (30) with at a vehicle side (2) a connector member (33), a cylindrical hollow stator body (31) connected to the connector member (33); an outer surface of the stator body being equipped with stator windings, and further comprising a cylindrical rotor body (60) coaxially enclosing the stator (30); the electric motor (4) further comprising a power electronics device for powering the stator windings,
**characterized in that** the hollow stator body is provided with a stator body opening (90) at a road side of the electric motor (4) for receiving the power electronics device, and the enclosing rotor body (71) is provided with a removable cover plate (80) covering a rotor body opening of the rotor body (71) at the road side and covering the stator body opening (90).

2. The in-wheel electric motor (4) according to claim 1, wherein the connector member (33) has an end face facing the road side, a casing (100) of the power electronics device (42) being connected to the end face via a plugs and sockets arrangement.

3. The in-wheel electric motor (4) according to claim 2, wherein the connector member (33) is provided with a number of protruding elements or recesses (91) extending from the end face and parallel to an axial direction (A), and
the power electronics device is positioned on the connector member within the hollow stator body with the protruding elements being received in corresponding counter recesses (101) or the recesses on the connector member receiving corresponding protruding elements in a facing surface of the casing of the power electronics device.

4. The in-wheel electric motor (4) according to any one of claims 1-3, wherein the connector member is provided with a first opening (92) of a feed channel for liquid coolant and a second opening (93) of a return channel opening for liquid coolant, each of the feed and return channels being substantially parallel to the axial direction (A) of the connector member (33), and
the power electronics device is provided with a cooling circuitry, the cooling circuitry comprising a feed connector (102) and a return connector (103) for liquid coolant on the facing surface, with the feed connector arranged for liquid tight coupling to the feed channel and the return connector arranged for liquid tight coupling to the return channel, when positioned on the connector member.

5. The in-wheel electric motor (4) according to claim 4, wherein the hollow stator body (31) is provided with an inner mounting ridge parallel to the circular opening (90) of the hollow stator body (31), and the casing (100) of the power electronics device (42) is provided at the road side (3) with a bracket (105) that abuts the inner mounting ridge when the power electronics device is positioned on the connector member.

6. The in-wheel electric motor (4) according to claim 2 or 3, wherein the hollow stator body (31) is provided on its inner circumferential surface with at least two inner mounting ridges which extend parallel to the axis of rotation (R), and the casing (100) of the power electronics device (42) is provided at the road side with a bracket (105) that abuts the inner mounting ridges when the power electronics device is positioned on the connector member (33).

7. The in-wheel electric motor (4) according to claim 1, wherein the rotor cover plate (80) is provided with a circular cover plate opening centred with the electric motor (4) rotation axis, and
the power electronics device (42) comprises at the road side a resolver (81) for sensing a relative angular position of the rotor with respect to the stator windings, which resolver has a rotation axis coinciding with the electric motor (4) rotation axis (R) and is arranged within the circular cover plate opening and attached to the cover plate (80).

8. A method for assembling an in-wheel electric motor (4); the electric motor (4) comprising a stator (30) with at a vehicle side an connector member (33), a cylindrical hollow stator body (31) with a central axis R, connected to the connector member (33) and on an outer surface of the stator body equipped with stator windings, the electric motor (4) further comprising a power electronics device (42) for powering the stator windings,
**characterized by**
the connector member (33) having a number of protruding or recessed elements (91) parallel to the axial direction (A) and extending towards an opening (90) of the hollow stator body (31) at a road side (3);
a surface of the casing (100) of the power electronics device being provided with complementary protruding or receiving elements (101) for engaging the protruding or recessed elements of the connector member;
wherein the casing (100) of the power electronics device (42) is positioned via the road side opening inside the hollow stator body with the surface of the casing facing the connector member, and subsequently moving the power electronics device along the direction of the central axis (R) to the connector member; and
engaging the protruding or recessed elements of the connector member each in a corresponding one of the protruding or receiving elements on the surface of the casing of the power electronics device.

9. The method according to claim 8, the connector member comprising a feed channel (92) and a return channel (93) for coolant, each channel being substantially parallel to the axial direction (A) of the connector member, the power electronics device comprising a feed connector (101) and a return connector (102) on the facing surface, wherein the method comprises the step of
sealingly coupling the feed connector to the feed channel and sealingly coupling the return connector to the return channel, while the protruding or receiving elements of the connector member are slidingly engaged with the complementary protruding or receiving elements on the power electronics device.

10. A drive assembly (1) for a wheel of a vehicle, comprising an in-wheel electric motor (4) according to any one of preceding claims 1-7, the electric motor (4) comprising a stator part (30) and a rotor part (60), the stator part and rotor part being coaxial with respect to a rotation axis (R), wherein the rotor part and the stator part are both adapted to be arranged at least partially within the wheel.

## Patentansprüche

1. Radinterner Elektromotor (4) umfassend einen Stator (30) mit einem Verbindungselement (33) an einer Fahrzeugseite (2), einem zylindrischen hohlen Statorkörper (31), der mit dem Verbindungselement (33) verbunden ist; wobei eine äußere Oberfläche des Statorkörpers mit Statorwicklungen ausgestattet ist, und ferner umfassend einen zylindrischen Rotorkörper (60), der den Stator (30) koaxial umschließt; wobei der Elektromotor (4) ferner eine Leistungselektronikvorrichtung zur Stromversorgung der Statorwicklungen umfasst,
**dadurch gekennzeichnet, dass**:
der hohle Statorkörper mit einer Statorkörperöffnung (90) auf einer Straßenseite des Elektromotors (4) zur Aufnahme der Leistungselektronikvorrichtung versehen ist, und der umschließende Rotorkörper (71) mit einer abnehmbaren Deckplatte (80) versehen ist, die eine Rotorkörperöffnung des Rotorkörpers (71) auf der Straßenseite abdeckt und die Statorkörperöffnung (90) abdeckt.

2. Radinterner Elektromotor (4) nach Anspruch 1, wobei das Verbindungselement (33) eine der Straßenseite zugewandte Stirnfläche aufweist, wobei ein Gehäuse (100) der Leistungselektronikvorrichtung (42) über eine Stecker- und Buchsenanordnung mit der Stirnfläche verbunden ist.

3. Radinterner Elektromotor (4) nach Anspruch 2, wobei das Verbindungselement (33) mit einer Anzahl von hervorstehenden Elementen oder Aussparungen (91) versehen ist, die sich von der Stirnfläche und parallel zu einer axialen Richtung (A) erstrecken, und
die Leistungselektronikvorrichtung auf dem Verbindungselement innerhalb des hohlen Statorkörpers positioniert ist, wobei die hervorstehenden Elemente in entsprechenden Gegenaussparungen (101) aufgenommen werden oder die Aussparungen auf dem Verbindungselement entsprechende hervorstehende Elemente in einer gegenüberliegenden Oberfläche des Gehäuses der Leistungselektronikvorrichtung aufnehmen.

4. Radinterner Elektromotor (4) nach einem der Ansprüche 1 bis 3, wobei das Verbindungselement mit einer ersten Öffnung (92) eines Zulaufkanals für flüssiges Kühlmittel und einer zweiten Öffnung (93) eines Rücklaufkanals für flüssiges Kühlmittel versehen ist, wobei jeder der Zulauf- und Rücklaufkanäle im Wesentlichen parallel zur axialen Richtung (A) des Verbindungselements (33) ist, und
die Leistungselektronikvorrichtung mit einem Kühlkreislauf versehen ist, wobei der Kühlkreislauf auf der gegenüberliegenden Oberfläche einen Zulaufanschluss (102) und einen Rücklaufanschluss (103) für flüssiges Kühlmittel umfasst, wobei der Zulaufanschluss für eine flüssigkeitsdichte Verbindung mit dem Zulaufkanal und der Rücklaufanschluss für eine flüssigkeitsdichte Verbindung mit dem Rücklaufkanal eingerichtet sind, sobald sie auf dem Verbindungselement positioniert werden.

5. Radinterner Elektromotor (4) nach Anspruch 4, wobei der hohle Statorkörper (31) mit einem inneren Befestigungsgrat parallel zur kreisförmigen Öffnung (90) des hohlen Statorkörpers (31) versehen ist, und das Gehäuse (100) der Leistungselektronikvorrichtung (42) auf der Straßenseite (3) mit einem Bügel (105) versehen ist, der an dem inneren Befestigungsgrat anliegt, wenn die Leistungselektronikvorrichtung auf dem Verbindungselement positioniert wird.

6. Radinterner Elektromotor (4) nach Anspruch 2 oder 3, wobei der hohle Statorkörper (31) auf seiner inneren Umfangsfläche mit mindestens zwei inneren Befestigungsgraten versehen ist, die sich parallel zur Rotationsachse (R) erstrecken, und das Gehäuse (100) der Leistungselektronikvorrichtung (42) auf der Straßenseite (3) mit einem Bügel (105) versehen ist, der an den inneren Befestigungsgraten anliegt, wenn die Leistungselektronikvorrichtung auf dem Verbindungselement (33) positioniert wird.

7. Radinterner Elektromotor (4) nach Anspruch 1, wobei die Rotordeckplatte (80) mit einer kreisförmigen Deckplattenöffnung versehen ist, die mit der Rotationsachse des Elektromotors (4) zentriert ist, und
die Leistungselektronikvorrichtung (42) auf der Straßenseite einen Resolver (81) zum Erfassen einer relativen Winkelposition des Rotors in Bezug auf die Statorwicklungen umfasst, wobei der Resolver eine Rotationsachse hat, die mit der Rotationsachse (R) des Elektromotors (4) zusammenfällt, und innerhalb der kreisförmigen Deckplattenöffnung angeordnet und an der Deckplatte (80) befestigt ist.

8. Verfahren zum Zusammenbauen eines radinternen Elektromotors (4); wobei der Elektromotor (4) einen Stator (30) mit einem Verbindungselement (33) auf einer Fahrzeugseite, einen zylindrischen hohlen Statorkörper (31) mit einer Zentralachse R, der mit dem Verbindungselement (33) verbunden und auf einer äußeren Oberfläche des Statorkörpers mit Statorwicklungen ausgestattet ist, umfasst, wobei der Elektromotor (4) ferner eine Leistungselektronikvorrichtung (42) zur Stromversorgung der Statorwicklungen umfasst,
**dadurch gekennzeichnet, dass**
das Verbindungselement (33) eine Anzahl von hervorstehenden oder vertieften Elementen (91) parallel zur axialen Richtung (A) aufweist, die sich zu einer Öffnung (90) des hohlen Statorkörpers (31) auf einer Straßenseite (3) erstrecken;
eine Oberfläche des Gehäuses (100) der Leistungselektronikvorrichtung mit komplementären hervorstehenden oder aufnehmenden Elementen (101) zum Einkuppeln mit den hervorstehenden oder vertieften Elementen des Verbindungselements versehen ist;
wobei das Gehäuse (100) der Leistungselektronikvorrichtung (42) über die straßenseitige Öffnung innerhalb des hohlen Statorkörpers so positioniert wird, dass die Oberfläche des Gehäuses dem Verbindungselement zugewandt ist, und anschließend die Leistungselektronikvorrichtung entlang der Richtung der Zentralachse (R) zu dem Verbindungselement bewegt wird; und
die vorstehenden oder vertieften Elemente des Verbindungselements jeweils in ein entsprechendes der vorstehenden oder aufnehmenden Elemente auf der Oberfläche des Gehäuses der Leistungselektronikvorrichtung einkuppeln.

9. Verfahren nach Anspruch 8, wobei das Verbindungselement einen Zulaufkanal (92) und einen Rücklaufkanal (93) für Kühlmittel umfasst, wobei jeder Kanal im Wesentlichen parallel zur axialen Richtung (A) des Verbindungselements ist, wobei die Leistungselektronikvorrichtung einen Zulaufanschluss (101) und einen Rücklaufanschluss (102) auf der gegenüberliegenden Oberfläche umfasst,
wobei das Verfahren den Schritt des abdichtenden Verbindens des Zulaufanschlusses mit dem Zulaufkanal und des abdichtenden Verbindens des Rücklaufanschlusses mit dem Rücklaufkanal umfasst, während die vorstehenden oder aufnehmenden Elemente des Verbindungselements gleitend mit den komplementären vorstehenden oder aufnehmenden Elementen auf der Leistungselektronikvorrichtung einkuppeln.

10. Antriebseinheit (1) für ein Rad eines Fahrzeugs, die einen radinternen Elektromotor (4) nach einem der vorhergehenden Ansprüche 1-7 umfasst, wobei der Elektromotor (4) einen Statorteil (30) und einen Rotorteil (60) umfasst, wobei der Statorteil und der Rotorteil in Bezug auf eine Rotationsachse (R) koaxial sind, wobei sowohl der Rotorteil als auch der Statorteil so angepasst sind, dass sie zumindest teilweise innerhalb des Rades angeordnet werden können.

## Revendications

1. Moteur électrique intégré à une roue (4) comprenant un stator (30) ayant au niveau d'un côté véhicule (2) un élément connecteur (33), un corps de stator creux cylindrique (31) connecté à l'élément connecteur (33) ; une surface extérieure du corps de stator étant équipée d'enroulements de stator, et comprenant en outre un corps de rotor cylindrique (60) enfermant coaxialement le stator (30) ; le moteur électrique (4) comprenant en outre un dispositif électronique de puissance pour alimenter en puissance les enroulements de stator,
**caractérisé en ce que** le corps de stator creux est muni d'une ouverture de corps de stator (90) au niveau d'un côté route du moteur électrique (4) pour recevoir le dispositif électronique de puissance, et le corps de rotor d'enfermement (71) est muni d'une plaque de recouvrement amovible (80) recouvrant une ouverture de corps de rotor du corps de rotor (71) au niveau du côté route et recouvrant l'ouverture de corps de stator (90).

2. Moteur électrique intégré à une roue (4) selon la revendication 1, dans lequel l'élément connecteur (33) a une face d'extrémité faisant face au côté route, un carter (100) du dispositif électronique de puissance (42) étant relié à la face d'extrémité via un agencement de prises et douilles.

3. Moteur électrique intégré à une roue (4) selon la revendication 2, dans lequel l'élément connecteur (33) est muni d'un nombre d'éléments en saillie ou d'évidements (91) s'étendant depuis la face d'extrémité et parallèlement à une direction axiale (A), et
le dispositif électronique de puissance est positionné sur l'élément connecteur à l'intérieur du corps de stator creux, les éléments en saillie étant reçus dans des contre-évidements correspondants (101) ou dans les évidements sur l'élément connecteur recevant des éléments en saillie correspondants dans une surface en vis-à-vis du carter du dispositif électronique de puissance.

4. Moteur électrique intégré à une roue (4) selon l'une quelconque des revendications 1 à 3, dans lequel l'élément connecteur est muni d'une première ouverture (92) d'un canal d'alimentation pour liquide de refroidissement et d'une seconde ouverture (93) d'un canal de retour pour liquide de refroidissement, chacun des canaux d'alimentation et de retour étant sensiblement parallèle à la direction axiale (A) de l'élément connecteur (33), et
le dispositif électronique de puissance est muni d'un circuit de refroidissement, le circuit de refroidissement comprenant un connecteur d'alimentation (102) et un connecteur de retour (103) pour liquide de refroidissement sur la surface en vis-à-vis, le connecteur d'alimentation étant agencé pour un couplage étanche aux liquides avec le canal d'alimentation et le connecteur de retour étant agencé pour un couplage étanche aux liquides avec le canal de retour, lorsqu'ils sont positionnés sur l'élément connecteur.

5. Moteur électrique intégré à une roue (4) selon la revendication 4, dans lequel le corps de stator creux (31) est muni d'une arête de montage intérieure parallèle à l'ouverture circulaire (90) du corps de stator creux (31), et le carter (100) du dispositif électronique de puissance (42) est agencé au niveau du côté route (3) avec un support (105) qui vient en butée contre l'arête de montage intérieure lorsque le dispositif électronique de puissance est positionné sur l'élément connecteur.

6. Moteur électrique intégré à une roue (4) selon la revendication 2 ou 3, dans lequel le corps de stator creux (31) est muni sur sa surface circonférentielle intérieure d'au moins deux arêtes de montage intérieures qui s'étendent parallèlement à l'axe de rotation (R), et le carter (100) du dispositif électronique de puissance (42) est muni au niveau du côté route d'un support (105) qui vient en butée contre les arêtes de montage intérieures lorsque le dispositif électronique de puissance est positionné sur l'élément connecteur (33).

7. Moteur électrique intégré à une roue (4) selon la revendication 1, dans lequel la plaque de recouvrement de rotor (80) est munie d'une ouverture circulaire de plaque de recouvrement centrée sur l'axe de rotation du moteur électrique (4), et
le dispositif électronique de puissance (42) comprend au niveau du côté route un résolveur (81) pour détecter une position angulaire relative du rotor par rapport aux enroulements de stator, lequel résolveur a un axe de rotation coïncidant avec l'axe de rotation (R) du moteur électrique (4) et est disposé à l'intérieur de l'ouverture circulaire de plaque de recouvrement et fixé à la plaque de recouvrement (80).

8. Procédé d'assemblage d'un moteur électrique intégré à une roue (4) ; le moteur électrique (4) comprenant un stator (30) avec au niveau d'un côté véhicule (2) un élément connecteur (33), un corps de stator creux cylindrique (31) ayant un axe central R, connecté à l'élément connecteur (33) et sur une surface extérieure du corps de stator équipée d'enroulements de stator, le moteur électrique (4) comprenant en outre un dispositif électronique de puissance (42) pour alimenter en puissance les enroulements de stator,
**caractérisé par**
l'élément de connecteur (33) ayant un nombre d'éléments en saillie ou évidés (91) parallèles à la direction axiale (A) et s'étendant vers une ouverture (90) du corps de stator creux (31) au niveau d'un côté route (3) ;
une surface du carter (100) du dispositif électronique de puissance étant munie d'éléments complémentaires en saillie ou de réception (101) pour mettre en prise les éléments en saillie ou évidés de l'élément connecteur ;
dans lequel le carter (100) du dispositif électronique de puissance (42) est positionné via l'ouverture côté route à l'intérieur du corps de stator creux avec la surface du carter faisant face à l'élément connecteur, et le déplacement ultérieur du dispositif électronique de puissance le long de la direction de l'axe central (R) vers l'élément connecteur ; et
la mise en prise des éléments en saillie ou évidés de l'élément connecteur chacun dans un élément correspondant des éléments en saillie ou de réception sur la surface du carter du dispositif électronique de puissance.

9. Procédé selon la revendication 8, l'élément connecteur comprenant un canal d'alimentation (92) et un canal de retour (93) pour liquide de refroidissement, chaque canal étant sensiblement parallèle à la direction axiale (A) de l'élément connecteur, le dispositif électronique de puissance comprenant un connecteur d'alimentation (101) et un connecteur de retour (102) sur la surface en vis-à-vis, dans lequel le procédé comprend l'étape consistant à
coupler de manière étanche le connecteur d'alimentation au canal d'alimentation et coupler de manière étanche le connecteur de retour au canal de retour, tandis que les éléments en saillie ou de réception de l'élément connecteur sont en prise de manière coulissante avec les éléments complémentaires en saillie ou de réception sur le dispositif électronique de puissance.

10. Ensemble d'entraînement (1) pour une roue d'un véhicule, comprenant un moteur électrique intégré à une roue (4) selon l'une quelconque des revendications 1 à 7 précédentes, le moteur électrique (4) comprenant une partie de stator (30) et une partie de rotor (60), la partie de stator et la partie de rotor étant coaxiales par rapport à un axe de rotation (R), dans lequel la partie de rotor et la partie de stator sont toutes deux adaptées pour être agencées au moins partiellement à l'intérieur de la roue.
